**Europäisches Patentamt**

**European Patent Office**

**Office européen des brevets**

(19)

(11) Numéro de publication: **0 022 045**
**B1**

(12) **FASCICULE DE BREVET EUROPEEN**

(45) Date de publication du fascicule du brevet: **29.06.83**

(51) Int. Cl.³: **B 62 M 9/10**

(21) Numéro de dépôt: **80420073.1**

(22) Date de dépôt: **19.06.80**

(54) Galet d'enroulement de chaîne, notamment pour les changements de vitesse de bicyclettes et véhicules analogues.

(30) Priorité: **26.06.79 FR 7917272**

(43) Date de publication de la demande:
**07.01.81 Bulletin 81/1**

(45) Mention de la délivrance du brevet:
**29.06.83 Bulletin 83/26**

(84) Etats contractants désignés:
**BE DE GB IT**

(56) Documents cités:
**BE - A - 493 330**
**FR - A - 1 168 825**
**FR - A - 1 417 855**
**FR - A - 2 213 865**

(73) Titulaire: **Etablissements LE SIMPLEX (société à responsabilité limitée)**
**3 et 5 rue de la Breuchillière Zône Industrielle Dijon St-Apollinaire**
**F-21019 Dijon Cedex (FR)**

(72) Inventeur: **Juy, Henri**
**43 rue Chabot-Charny**
**F-21000 Dijon (FR)**

(74) Mandataire: **Buttet, Roger et al,**
**"Cabinet Charras" 3, Place de l'Hôtel-de-Ville**
**F-42000 Saint-Etienne (FR)**

Courier Press, Leamington Spa, England.

Galet d'enroulement de chaîne, notamment pour les changements de
vitesse de bicyclettes et véhicules analogues.

L'invention concerne un galet ou pignon d'enroulement de chaîne, pour les changements de vitesse de bicyclettes et véhicules analogues, comprenant des moyens d'enroulement et de déplacement transversal de la chaîne.

Il est connu que dans les changements de vitesse pour bicyclettes et véhicules analogues, un ou des galets sont déplacés transversalement pour entraîner la chaîne et la faire passer sur l'un ou l'autre des pignons dentés de la roue libre solidaire de la roue arrière du cycle. Le ou les galets présentent des dents correspondant au pas de la chaîne qui est généralement du type à rouleaux et flasques latéraux. On connaît notamment le Brevet français n° 1.168.825 qui présente un galet avec chanfreinage bilatéral sur tout le pourtour du galet.

Dans ces appareils, le rôle du ou des galets est particulièrement important par suite de l'engrènement des maillons de la chaîne avec leurs dents, qui se répète à l'infini avec une grande fréquence. Cette importance est sensiblement accrue si l'on considère que, lorsqu'on veut changer la vitesse, on déplace transversalement les galets et on tire latéralement sur la chaîne, avec les réactions et effets qui en résultent. Dans toutes les phases de fonctionnement, et en particulier dans la phase de changement de vitesse, il importe que l'engrènement et les contacts des maillons et des dents s'opèrent dans de bonnes conditions: pour un bon fonctionnement du changement de vitesse et pour la satisfaction de l'usager, pour éviter les sauts de chaîne, pour une commande plus précise et plus douce des changements de vitesse, pour éliminer au maximum les chocs et vibrations qui sont désagréables et facteurs de destruction à la longue.

On sait d'autre part, que dans la recherche d'allègement et de réduction des encombrements qui prévaut dans l'industrie du cycle, de nouvelles chaînes dites "étroites" ou "compactes" sont apparues sur le marché. Ces chaînes permettent de monter des roues libres comportant un plus grand nombre de pignons (7 par exemple). Compte tenu des désalignements accentués, lesdites chaînes sont conçues pour avoir une bonne souplesse transversale. Les dimensions de leurs flasques intérieurs et extérieurs, sont réduites, de sorte que ces flasques ont souvent à peu près la dimension du diamètre des rouleaux.

Les conditions de contact des maillons avec les dents des galets étant modifiées, il a été étudié, conçu et créé selon l'invention le galet pour obtenir les meilleures conditions de contacts et de fonctionnement, et cela d'une manière polyvalente, aussi bien pour les chaînes étroites que pour les chaînes utilisées jusqu'à présent.

Ce galet qui comprend une pluralité de dents correspondant au pas de la chaîne, les sommets des dents étant chanfreinés à la périphérie et sur les faces latérales du galet, est caractérisé dans les revendications, en ce que sur lesdites faces latérales, les angles formés aux sommets des dents, du côté des creux entre les dents (angles d'attaque des dents), sont abbatus par les chanfreins pratiqués autour des creux des dents, profilés de manière à réduire progressivement l'épaisseur des dents de la base à leurs sommets, lesdits chanfreins étant formés pour avoir une valeur nulle aux fonds des creux des dents, ou à proximité, de sorte que l'épaisseur du galet n'est pas modifiée au fond des creux des dents.

Les avantages obtenus grâce à cette invention consistent essentiellement en ce que:

— Le guidage de la chaîne est assuré avec le minimum de jeu transversal, en particulier avec les chaînes dites étroites ou compactes à flasques de dimensions réduites, par le chanfrein d'attaque et la hauteur de dents augmentée. De ce fait, la commande à l'aide du levier de changement de vitesse est plus précise. La précision et le guidage sont aussi meilleurs à partir du levier de commande du changement de vitesse, grâce à l'engrènement franc et rapide dû aux chanfreins, ainsi qu'à la forme et à l'épaisseur des dents aux sommets, évitant les tâtonnements lors de la commande. La meilleurs attaque des dents sur les rouleaux de la chaîne par les chanfreins selon l'invention et l'abattement de l'angle d'attaque, diminue très sensiblement et peut même supprimer les vibrations dues aux contacts multiples et répétés entre les dents et les rouleaux et flasques. Par conséquent, on a un fonctionnement plus doux et un meilleur rendement, cela même lorsque la ligne de chaîne est très inclinée par rapport au plan général du cadre.

L'invention est exposée ci-après plus en détail à l'aide des dessins représentant plusieurs modes d'exécution.

La figure 1 représente en perspective un galet réalisé conformément à la présente invention;

La figure 2 représente une vue de profil à plus grande échelle, du galet;

La figure 3 représente une vue de face du galet illustré figure 2;

La figure 4 représente une vue en coupe partielle suivant la ligne 4—4 de la figure 5, et montrant un galet en prise avec une chaîne dite "étroite";

La figure 5 représente une vue en coupe suivant la ligne 5—5 de la figure 4, et illustrant le galet supérieur monté entre les flasques du guide-chaîne d'un changement de vitesse et la chaîne dite "étroite" de transmission;

La figure 6 représente une vue partielle à plus grande échelle, montrant les points de contact de la chaîne avec le chanfrein d'entrée de dent, lors de l'enroulement en désalignement de la chaîne;

La figure 7 représente une vue en plan suivant flèche F, de la figure 6;

La figure 8 représente une vue partielle en couple considérée suivant la ligne 8—8 de la figure 6, montrant le contact de la chaîne désalignée avec le chanfrein d'entrée de dents, au début de l'engrènement;

La figure 9 représente une vue partielle illustrant une variant de réalisation des sommets des dents du galet;

Les figures 10 et 11 représentent des vues partielles en coupes semblables à la figure 8, illustrant des variantes de forme en section du chanfrein d'entrée de dent.

Le galet 1 comprend un moyeu 1a d'épaisseur e1, alésé pour le montage sur une bague de roulement 2 par exemple elle-même montée tournante sur un axe lisse, ou partie lisse d'une vis 3, pour le montage sur les flasques 4 et 5 constituant le guide-chaîne d'un changement de vitesse. Des rainures latérales 1b du galet reçoivent de manière connue, des cuvettes 6 d'étanchéité, serrées entre les flasques et la bague 2 (figure 5).

Autour du moyeu 1a s'étend périphériquement une partie 1c plus étroite (épaisseur e2) comprenant une pluralité de dents 1d régulièrement réparties et séparées par des creux 1e en secteur de cercle, dans lesquels viennent se loger les rouleaux C1 de la chaîne C qui doit s'enrouler sur le galet.

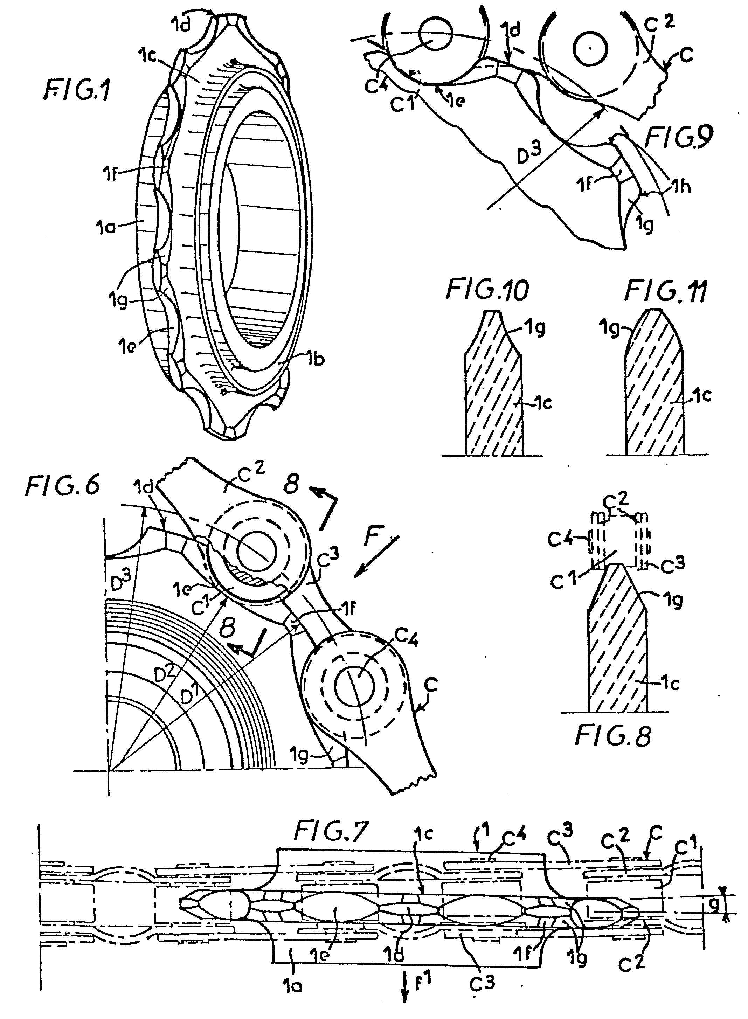

Les dents 1d, sont de manière connue, chanfreinées en 1f de chaque côté de la partie 1c, pour obtenir une zone de sommet des dents plus mince (épaisseur e3, figure 2), facilitant l'engagement des dents entre les flasques de la chaîne.

Conformément à la présente invention, les angles a formés aux sommets des dents, du côté des creux entre dents, et appelés angles d'attaque des dents, sont abattus par des chanfreins progressifs 1g réduisant progressivement l'épaisseur des dents dans ces zones (épaisseur e4 aux angles 1, figure 2).

Les intersections des chanfreins 1g avec le chanfrein périphérique 1f, se trouvent à proximité de la partie médiane des dents. On prévoit de supprimer ces intersections, de préférence par une courbe de raccordement b (figure 3), de façon à supprimer ou adoucir tout contact gênant avec les flasques de la chaîne lors de l'engrènement, et améliorer les conditions d'engrènement du fait de la situation de ces intersections hors du champ de passage des profils arrondis des flasques.

D'une manière importante, les chanfreins 1g sont formés pour avoir une valeur nulle aux fonds des creux des dents ou à proximité, de sorte que lesdits fonds ont l'épaisseur non réduite e2 de la partie 1c du galet. Cette épaisseur non réduite permet d'assurer un jeu latéral minimum du maillon de chaîne sur le galet, quelle que soit la différence des profils arrondis des flasques C2—C3 par rapport aux rouleaux C1 de la chaîne (voir figure 5).

Suivant l'exemple illustré, le chanfrein périphérique 1f subsistant entre les chanfreins 1g, est établi sur une profondeur c inférieure à la profondeur d des creux des dents, de manière à conserver l'épaisseur normale e2 sur le plus grand diamètre possible pour un meilleur guidage transversal de la chaîne (figure 3).

Selon la figure 9, les angles a d'attaque des dents sont de préférence abattus par un chanfrein transversal 1h, un rayon, un profil à développante de cercle, ou tout autre profil, afin que les rouleaux C1 de la chaîne s'enroulant selon une développante de cercle, s'engagent facilement dans les creux des dents sans accrochage sur les angles.

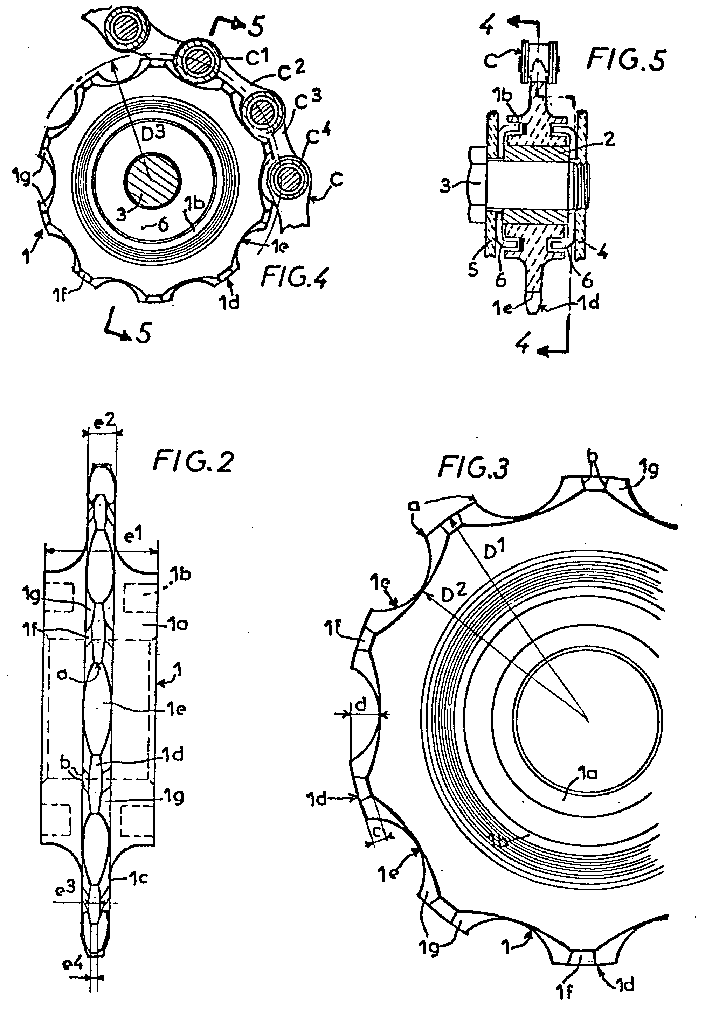

A noter encore que les chanfreins 1g ont un profil droit en section (figure 8), mais peuvent avoir un profil différent, par exemple convexe ou ogival (figure 11) ou concave (figure 10).

D'autre part, comme on l'a vu plus haut, les chaînes étroites ou compactes ont des flasques intérieurs C2 et extérieurs C3 plus réduits, ne particulier les parties de liaison avec les axes C4 ont approximativement la dimension du diamètre des rouleaux C1.

De ce fait, avec un galet classique, les dents pénètrent moins loin entre les flasques à l'enroulement, ce qui nuit au guidage transversal de la chaîne. Pour remédier à cet inconvénient, on a prévu d'augmenter la hauteur de dent, c'est à dire le diamètre extérieur D1 du galet, étant entendu que le diamètre intérieur D2 (figure 3) de fonds de dents, ne doit pas être modifié. A noter également que le rayon des creux des dents est égal à celui des rouleaux de la chaîne.

Bien entendu, tel que réalisé, le galet conserve toute son efficacité avec des chaînes normales.

Le galet selon l'invention est réalisé en toute matière convenable et de préférence en matières plastiques connues, par exemple sous la marque DELRIN, RILSAN . . .

Le galet ainsi décrit, il convient, en se référant notamment aux figures 4, 5, 6, 7, 8, de souligner les effets en ce qui concerne les contacts des maillons de la chaîne avec les dents du galet, dans les diverses phases d'engrènement et de fonctionnement du changement de vitesse.

Dans l'exemple illustré, on considère le galet du guide-chaîne d'un changement de vitesse arrière.

Comme on le voit aux figures 4 et 5, les rouleaux *C1* de la chaîne sont tour à tour en appui dans les creux 1e des dents, tandis que les dents 1d pénètrent entre les flasques intérieurs C2 ou extérieurs C3 jusqu'a proximité du diamètre primitif D3 d'enroulement ou d'engrènement, avec un faible jeu transversal lorsqu'il s'agit des flasques intérieurs.

Lorsqu'on déplace le guide-chaîne transversalement, par exemple selon la flèche F1, figure 7, afin de faire passer la chaîne sur un autre pignon de la roue libre, il se produit une déformation et un désalignement de ladite chaîne par rapport au galet (angle g). Ce désalignement est d'autant plus accentué lorsque la chaîne passe sur le petit pignon de la roue libre, tandis qu'elle s'enroule sur le plus petit plateau du pédalier, ou inversement (surtout lorsque ladite roue libre a 6 ou 7 pignons et le pédalier 2 ou 3 plateaux). Dans ces cas extrêmes, les flasques intérieurs C2 de la chaîne peuvent être très décentrés par rapport aux dents du galet (figure 7). Le chanfrein d'attaque des dents 1g permet d'assurer l'engrènement certain et correct de la chaîne sur le galet, par glissement naturel des flasques intérieurs C2 (même lorsqu'ils sont près du sommet des dents, figure 8), sur les chanfreins 1g, comme illustré à la figure 6 où le flasque extérieur de la chaîne a été enlevé pour mieux voir le flasque intérieur C2 en appui contre le chanfrein 1g.

Il n'est pas exclu de réaliser des chanfreins d'entrée de dents selon l'invention, pour d'autres applications telles que sur les couronnes dentées de roue libre, de pédalier, ou tout autre denture coopérant avec une chaîne du type précité.

**Revendications**

1. Galet d'enroulement de chaîne, en particulier pour les changements de vitesse pour bicyclettes et véhicules similaires, comprenent une pluralité de dents (1d) correspondant au pas de la chaîne (C), les sommets et les creux des dents étant chanfreinés à la périphérie et sur les faces latérales du galet, caractérisé en ce que, sur les dites faces latérales, les angles (a) formés aux sommets des dents, du côté des creux entre les dents (angles d'attaque des dents), sont abattus par les chanfreins (1g) pratiqués autour des creux des dents, profilés de manière à réduire progressivement l'épaisseur des dents de la base à leurs sommets, lesdits chanfreins (1g) étant formés pour avoir une valeur nulle aux fonds des creux des dents, ou à proximité, de sorte que l'épaisseur du galet n'est pas modifiée aux fonds des creux de dents.

2. Galet suivant 1, caractérisé en ce que les chanfreins (1g) d'entrée de dents ont un profil droit en section transversale.

3. Galet suivant 1, caractérisé en ce que les chanfreins d'entrée (1g) de dents ont un profil concave en section transversale.

4. Galet suivant 1, caractérisé en ce que les chanfreins d'entrée (1g) de dents ont un profil convexe ou ogival en section transversale.

5. Galet suivant 1, caractérisé en ce que les arêtes à l'intersection des chanfreins (1g) d'entrée de dents et du chanfrein périphérique (1f), sont adoucies ou supprimées par des formes arrondies ou courbes (b) de raccordement.

6. Galet suivant 1, caractérisé en ce que les angles formés aux sommets des dents, du côté des creux des dents, sont abattus pour faciliter l'engagement des rouleaux sans friction ni contact anormal lors de l'enroulement de la chaîne sur le galet, compte tenu de la profondeur des creux des dents par rapport au diamètre primitif d'enroulement.

7. Galet suivant 1, caractérisé en ce que le chanfrein périphérique (1f) subsistant entre les chanfreins (1g) d'entrée de dents, est réalisé sur une distance plus réduite (c) que la distance (d) entre le creux et le sommet des dents, afin d'assurer un guidage et un entraînement transversal de la chaîne (C), sans jeu important entre le galet et les flasques intérieurs.

8. Galet suivant 1 et 5, caractérisé en ce que les arêtes out formes arrondies, à l'intersection des chanfreins (1g) d'entrée de dents et du chanfrein périphérique (1f) se trouvant vers la partie médiane des dents (1d), ce qui améliore les conditions d'engrénement de la chaîne.

**Patentansprüche**

1. Kettenantriebrolle, insbesondere für die Gangschaltungen von Fahrrädern und ähnlichen Fahrzeugen, die eine Mehrzahl von der Teilung der Kette (C) entsprechenden Zähnen (1d) aufweist, mit Ausschrägung der Kopfkanten und der Einkerbungen der Zähne auf dem Umfang und den seitlichen Flächen der Rolle, dadurch gekennzeichnet, dass die auf den besagten seitlichen Flächen, an den Kopfkanten der Zähne, auf der Seite der Einkerbungen zwischen den Zähnen vorgesehenen Winkel (a) (Auslaufwinkel der Zähne) durch die um die Einkerbungen herum gebildeten Ausschrägungen (1g) abgeschlagen sind, die eine Formgebung zur allmählichen Verminderung der Stärke der Zähne von dem Fuss letzterer bis zu derer Kopf aufweisen, wobei die genannten Ausschrägungen (1g) so gebildet sind, dass sie am Boden der Einkerbungen der Zähne oder in der unmittelbaren Nähe einen Nullwert haben, damit die Tiefe der Rolle am Boden der Zahneinkerbungen nicht geändert wird.

2. Rolle gemäss Anspruch 1, dadurch gekennzeichnet, dass die Eintrittausschrägungen (1g) der Zähne ein geradliniges Profil im Querschnitt aufweisen.

3. Rolle gemäss Anspruch 1, dadurch gekennzeichnet, dass die Eintrittausschrägungen (1g) der Zähne ein Konkavprofil im Querschnitt aufweisen.

4. Rolle gemäss Anspruch 1, dadurch gekennzeichnet, dass die Eintrittausschrägungen (1g) der Zähne ein Konvexprofil oder ein Spitzbogenprofil im Querschnitt aufweisen.

5. Rolle gemäss Anspruch 1, dadurch gekennzeichnet, dass die Scharfkanten am Kreuzpunkt der Eintrittausschrägungen (1g) der Zähne mit der Umfangausschrägung (1f) durch die abgerundeten oder gebogenen Verbindungsformen (b) abgestumpft oder beseitigt sind.

6. Rolle gemäss Anspruch 1, dadurch gekennzeichnet, dass die an den Kopfkanten der Zähne, auf der Seite der Zahneinkerbungen gebildeten Winkel abgeschlagen sind, um das reibungslose Eingreifen, ohne unzulässige Berührung, der Walzen bei dem Umwickeln der Kette auf die Rolle zu erleichtern, und zwar unter Berücksichtigung von der Einkerbungstiefe der Zähne in bezug auf den ursprünglichen Umwickelndurchmesser.

7. Rolle gemäss Anspruch 1, dadurch gekennzeichnet, dass die zwischen den Eintrittsausschrägungen (1g) der Zähne bestehende Umfangsausschrägung (1f) auf einer Entfernung vorgesehen ist, die kleiner also die Entfernung zwischen der Einkerbung und der Kopfkante der Zähne ist, damit eine Führung und ein Antrieb der Kette (C) in der Querrichtung ohne beträchtlichen Spielraum zwischen der Rolle und den Innenflanschen bewirkt werden.

8. Rolle gemäss Anspruch 1 und 5, dadurch gekennzeichnet, dass die Scharfkanten oder abgerundeten Formen, am Kreuzpunkt der Eintrittsausschrägungen (1g) der Zähne und der Umfangsausschrägung (1f), sich in dem mittleren Teil (1d) der Zähne befinden, wobei die Ineinandergreifenverhältnisse der Kette verbessert werden.

**Claims**

1. Chain drive roller, more particularly for the speed gear devices of bicycles and like vehicles, comprising a plurality of teeth (1d) corresponding to the pitch of the chain (C), the tips and the recesses of the teeth being bevelled at the periphery and on the lateral faces of the roller, characterized in that the angles (a) formed at the tips of the teeth, on the said lateral faces, on the side of the recesses between the teeth (angle of taper of the teeth) are sloped down by the bevels (1g) provided around the recesses of the teeth, shaped so as to reduce gradually the thickness of the teeth from the root to the top thereof, said bevels (1g) being formed in order to have a zero value at the bottom of the recesses of the teeth, or adjacent thereto, the thickness of the roller being thus not modified at the bottoms of the recesses of the teeth.

2. Roller according to Claim 1, characterized in that the tooth inlet bevels (1g) have an upright shape in cross section.

3. Roller according to Claim 1, characterized in that the tooth inlet bevels (1g) have a concave shape in cross section.

4. Roller according to Claim 1, characterized in that the tooth inlet bevels (1g) have a convex or ogival shape in cross section.

5. Roller according to Claim 1, characterized in that the sharp edges at the intersection of the tooth inlet bevels (1g) and of the peripheral bevel (1f) are blunted off or suppressed by rounded or curved connecting shapes (b).

6. Roller according to Claim 1, characterized in that the angles formed at the tips of the teeth, on the side of the recesses of the teeth, are sloped down in order to facilitate the engagement of the rolls without friction nor abnormal contact for the winding of the chain round the roller, while taking into account the depth of the recesses of the teeth relative to the primary winding diameter.

7. Roller according to Claim 1, characterized in that the peripheral bevel (1f) subsisting between the tooth inlet bevels (1g) is provided along a distance (c) smaller than the distance (d) between the recess and the tip of the teeth, so that the chain (C) will be guided and driven crosswise without significant clearance between the roller and the inside cheeks.

8. Roller according to Claims 1 and 5, characterized in that the sharp edges or rounded forms or shapes, at the intersection of the tooth inlet bevels (1g) and of the peripheral bevel (1f), are disposed toward the medial portion of the teeth (1d), the meshing conditions of the chain being improved thereby.

0 022 045

FIG.1

FIG.9

FIG.10  FIG.11

FIG.6

FIG.8

FIG.7

0 022 045

FIG.4

FIG.5

FIG.2

FIG.3